# EUROPEAN PATENT SPECIFICATION

(11) **EP 0 270 548 B1**
(45) Date of publication and mention of the grant of the patent: **02.11.1995**
(21) Application number: 86905452.8
(22) Date of filing: 13.08.1986
(51) Int. Cl.: F26B 3/30, A21B 2/00, F27B 9/06, F24C 7/04

(54) **HEAT TREATING OVEN**
OFEN FÜR WÄRMEBEHANDLUNG
FOUR POUR TRAITEMENT THERMIQUE

(30) Priority: 15.08.1985 SE 8503813
(43) Date of publication of application: 15.06.1988
(73) Proprietor: Tri Innovations AB, S-431 36 Mölndal (SE); ELVÄRMEVERKEN AB, S-438 03 Härryda (SE)
(72) Inventor: KARLSSON, Lars, S-439 00 Onsala (SE)
(74) Representative: Roth, Ernst Adolf Michael
(86) International application number: SE8600363
(87) International publication number: WO8701186

(56) References cited:
- WO-A-85/03766
- DE-A- 2 731 075
- DE-B- 2 248 640
- GB-A- 1 530 823
- SE-A-83 043 638
- US-A- 3 526 752
- Derwent's Abstract No. 86-092982/14, SU 1179-054-A

## Description

### Background of the invention

The present invention refers to a heat treating oven intended for different types of heat treatment of planar goods or hanging goods and e.g. for surface treated objects, foodstuff, etcetera, and having the inner sides of the oven walls at least partly provided with reflecting material and supporting a number of infra-red radiating tubes connectable to a current source, and which oven section is equipped with supply air terminal devices.

For such heat treatment purposes either convection ovens have earlier been used, in which the heat transfer medium is air, or ovens, heated by infra-red radiation, whereby the heat transfer is effected by way of electromagnetic radiation within the wave length bands, short-wave, medium-wave and long-wave.

At convection ovens the heat energy transfer often requires extended heating time and in order to reduce the time the air temperature in the oven is often raised. This results in that the surface of the heat treated object absorbs more energy than can be transported into the surface to be subjected to the heat treatment, which causes forming of a "surface-skin", which prevents water and/or solvents from escaping from the layer, which e.g. at painted surfaces results in surface defects.

Another method of reducing the time is to increase the air velocity, which is possible when the surface to be subjected to the heat treatment has an ability to withstand high air velocity. This is not the case e.g. at pulverulent or low viscous coatings, which do not resist air scrubbing, which will be the result of high air velocity.

Infra-red ovens give a number of advantages, but they also have certain drawbacks, which i.a. consist therein that the air temperature in the oven can assume rather high temperatures as 10% of the infra-red tube effect is converted into convection heat, and this can be a drawback e.g. at curing of varnish upon heat-sensitive materials, or uneven heat can be achieved upon objects having varying thickness of material and/or due to shadows.

The control of the infra-red oven necessiates rather a complex control equipment, which means high establishment investments.

A known infra-red oven, according to SE-A-8304363-8, (EP-A-0133 847) which discloses the features according to the preamble of Claim 1 incorporates an oven chamber. where the inner sides of the oven walls are provided with reflecting material and support a number of infra-red radiating tubes connectable to a current source, and which oven section is equipped with supply air terminal devices, whereby the supply air terminal devices by blowers circulate the oven atmosphere through the oven. This merely brings about a cooling and/or equalization of the air temperature in the different parts of the oven and does not give the oven a possibility of utilizing the merits of the convection heating.

### Purpose and most essential features of the invention

The purpose of the invention is to provide a heat treating oven of the above-mentioned type, which eliminates the above drawbacks at the same time as it maintains the positive properties of the different types of ovens, and which oven furthermore, as compared to earlier constructions, will get a superior flexibility, and this has been achieved by the features of Claim 1.

### Description of the drawings

The invention hereinafter will be further described with reference to embodiments shown in the accompanying drawings.
Figure 1 shows in a schematic section an embodiment of a conventional convection oven,
Figure 2 is a corresponding cross-section of a conventional infra-red oven,
Figure 3 shows in a similar cross-section an oven module
Figure 4 is a corresponding cross-section through a first embodiment of an oven section according to the invention,
Figure 5 shows in a side view a heat treating oven according to the invention in an embodiment according to figure 4,
Figure 6 is a longitudinal section through a further embodiment of an oven module according to the invention, and
Figures 7a, b and c show in side views different combinations of heat treating ovens according to the invention.

### Description of embodiments

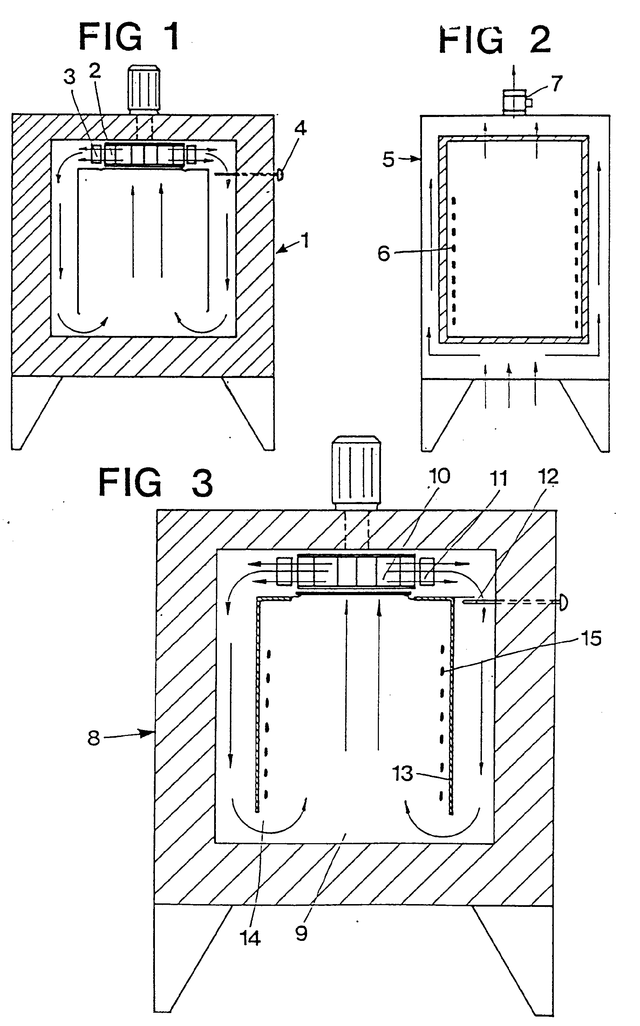

In figure 1 is shown, in a schematic cross-section, a conventional embodiment of a convection oven 1, equipped with a circulation blower 2 and a heating unit 3 for heating the air conveyed by the blower. A thermal element 4 or the like is arranged for sensing and controlling the air temperature in the oven.

In figure 2 is shown a corresponding view of a conventional infra-red radiation oven 5 equipped with a number of infra-red tubes 6. This oven is also provided with an exhaust air terminal device 7 forming part of a simple supply-and-exhaust air system.

These two conventional oven sections in all essential parts correspond to earlier known embodiments and they have the merits and deficiencies thereof.

In figure 3 is shown in a cross-section an oven section 8, which incorporates an oven chamber 9 equipped with circulation blower 10, heating unit 11 and air temperature sensor 12. Inside the oven chamber there is arranged an inner wall 13, which is open at the lower side, where it has an adjustable air slot 14 and is adapted in a conventional manner to guide the flow of the convection air through the oven chamber. This inner wall is produced from a reflecting material, at least on parts of its inner side, and it supports a number of infra-red tubes 15.

Due to this design there is obtained an oven section, which is a combination of a convection oven and an infra-red oven, which from a performance point of view is superior to earlier conventional ovens.

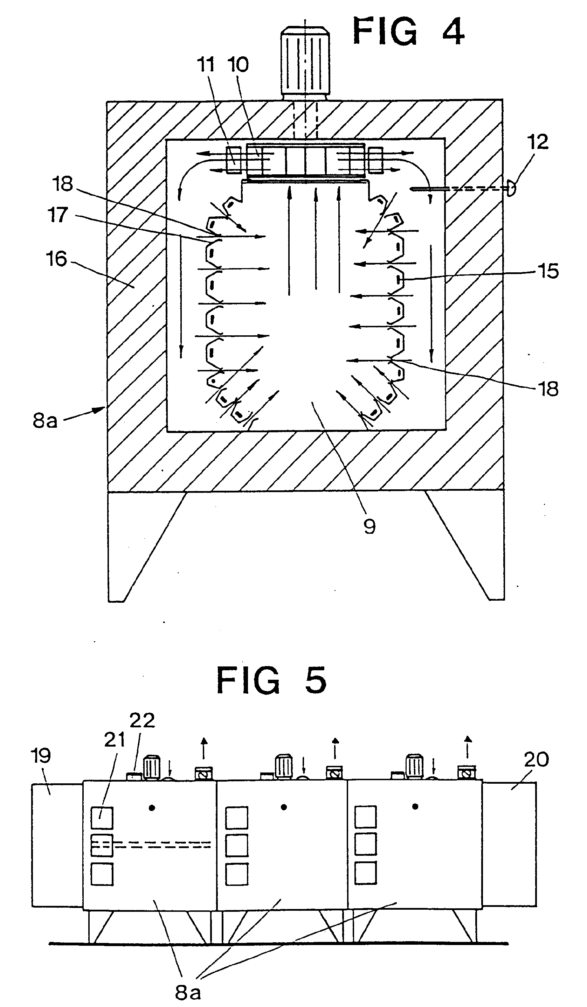

Figure 4 shows in a cross-section corresponding to figure 3 a modified oven section according to the invention, which differs from the oven shown in figure 3 in the design of the inner oven wall. Details having direct likeness with those of the embodiment according to figure 3 have been given the same reference numerals as these.

This alternative oven section 8a thus presents an oven chamber 9, which is enclosecd by an outer, insulating external wall 16, which also supports circulation blower 10, heating unit 11 and temperature sensor 12, which are required for the convection heat yield. The inner wall 17 of the oven chamber is manufactured from a reflecting material and it is shaped into a number of nozzles 18, through which the air conveyed by the centrifugal blower will reach the oven chamber. In the embodiment shown the space between each pair of adjacent nozzles 18 is provided with an infra-red tube 15 attached to the inner wall 17. Electric connections and control equipment for the infra-red tubes is designed in a manner similar to that of a conventional infra-red oven and these components are therefore not shown in the drawings.

In figure 5 there is shown schematically in a side view a heat treating oven according to the invention in an embodiment having three oven sections or modules 8a. At the ends the oven is provided with inlet and outlet locks 19 and 20 resp., and the view also shows the location of the connection boxes for infra-red tubes and for heating units 21 and 22 resp. With this configuration it is possible by using identical oven modules 8a, to bring about a rapid heating in the first section by means primarily of the infra-red tubes. whereas in the second section a continued heating and a temperature equalization is effected by a cooperation of convection and radiation, whereas the last section is used for any remaining need for temperature equalization and for a holding time.

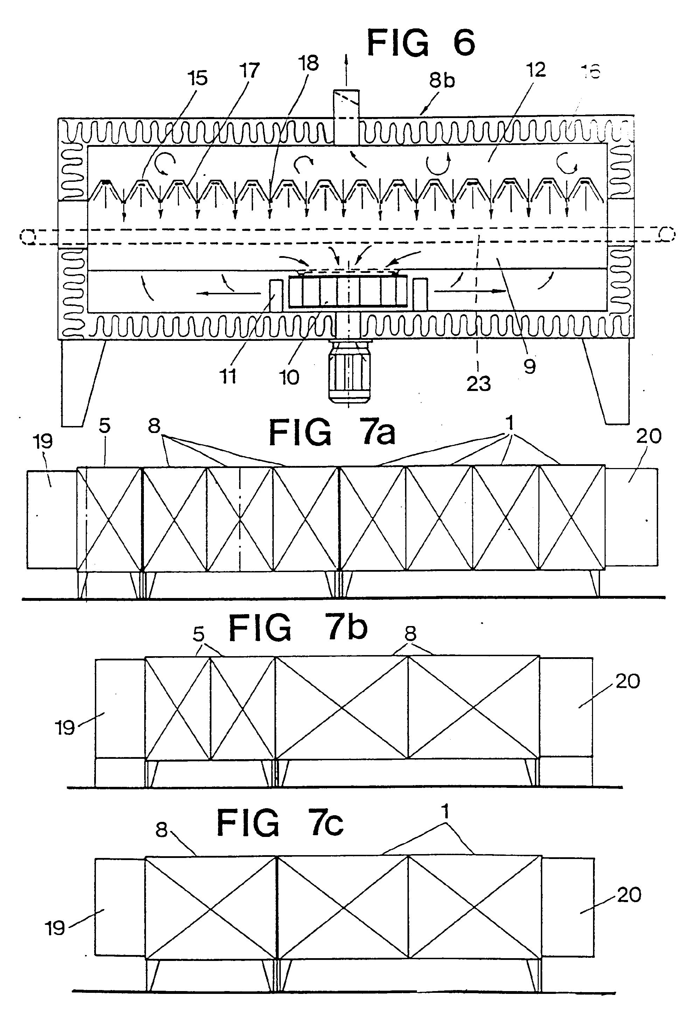

In the embodiments according to figures 3 - 5 there are shown oven sections with blower, blower motor and heating unit located at the roof of the oven chamber, but these components can with similar result be located in the oven wall or in the oven bottom, such as shown in figure 6, which is a longitudinal section through an oven section in a further embodiment according to the invention.

Also in this embodiment identical components have been given the same reference numerals. In the oven chamber 9 there has been installed a conveyor 23, upon which the goods to be treated in the oven are conveyed. As can be clearly seen it has been intimated that the space between each two adjacent nozzles 18 in one portion of the oven chamber is not provided with infra-red tubes 15 but the infra-red tubes are arranged more sparsely in this portion.

Figures 7a - 7c show different ovens assembled from oven sections formed as modules according to the invention and combined with other sections in order to fit different requirements.

In figure 7a an inlet lock 19 is thus followed by a section 5, which is a pure infra-red oven according to figure 2. Thereafter follows a section having three combined modules 8, whereupon follows four sections of a pure convection oven in accordance with figure 1 before the oven ends with an outlet lock 20.

Figure 7b shows an embodiment with inlet lock 19, two infra-red sections, two double combined modules 8 and an outlet lock 20, and figure 7c incorporates an inlet lock 19, a double combined module 8. two double convection sections 1 and an outlet lock 20.

Due to the combined oven section according to the invention in which it is possible to effect a heat supply on one hand by means of radiation heat and on the other hand by convection it is achieved an unsurpassed flexibility in relation to different materials and different requirements. By assembling the combined oven section according to the invention with conventional convection and/or radiating units in accordance with the embodiments according to figures 7a - 7c is it possible only with three module units to assemble ovens, which are very far-reaching adapted to the specific case of use.

By the possibility of optionally heating or not heating the air circulated by the blower in the combined oven module, it is possible to adjust the air temperature depending on requirements. At a big flow of air and without heating of the air it is possible at the same time as e.g. a layer of varnish upon a heat-sensitive object is cured by the infra-red effect, to effect a cooling of the object, which means that the object will not be damaged.

The advantages of the combined oven in comparison with conventional units is the considerably increased flexibility compared to infra-red systems and the high efficiency compared to convection systems.

It is obtained a rapid heating, which is important at several cases of use, and it can e.g. result in better surface finish at powder painting, it is possible to reach a rapid temperature equalization at goods having different material thicknesses, and by the possibility of cooling the interior of the oven chamber by aid of the unheated recirculation air new possibilities will be presented for heat treatment of e.g. heat-sensitive goods.

## Claims

1. A heat treating oven incorporating at least one oven section (8,8a,8b), built in a modular system, and where the inner sides (13,17) of the oven walls at least partly are provided with reflecting material and support a number of infra-red radiating tubes (15) connectable to a current source, and which oven section is equipped with supply air terminal devices (10,14,18),
**characterized therin,**
that the air supply terminal devices incorporate air nozzles (18) shaped in the reflecting material of the oven walls and combined with infra-red radiating tubes (15), and
that at least one heating unit (3,11) is connected to the supply air terminal devices (10,14,18) and adapted to be optionally switched in for heating the supply air to an optional temperature, in order to impart upon the goods in one section a combination of heating by optional proportions of radiation heat caused by the infra-red tubes and convection heat caused by the heated supply air.

2. A heat treating oven as claimed in claim 1,
**characterized therin**,
that the infra-red radiating tubes (15) are provided in spaces between adjacent air nozzles.

3. A heat treating oven as claimed in anyone of claim 1 or 2,
**characterized therin**,
that it incorporates at least one oven section (8,8a,8b), built together with at least one conventional convection oven section and/or conventional infra-red oven section (1 and 5 resp.)

## Patentansprüche

1. Wärmebehandlungsofen mit zumindest einem Ofenabschnitt (8, 8a, 8b), der als modulares System aufgebaut ist und wobei die Innenseiten (13, 17) der Ofenwandungen zumindest teilweise mit reflektierendem Material versehen sind und eine Vielzahl von Infrarotstrahlungsröhren (15) tragen, die mit einer Stromversorgung verbindbar sind und wobei der Ofenabschnitt mit Anschlußeinrichtungen (10, 14, 18) zur Luftversorgung versehen ist,
dadurch gekennzeichnet,
daß die Anschlußeinrichtungen zur Luftversorgung Luftdüsen (18) haben, die in dem reflektierenden Material der Ofenwandungen ausgebildet sind und die mit Infrarotstrahlungsröhren (15) kombiniert sind, und daß zumindest eine Heizeinheit (3, 11) mit den Anschlußeinrichtungen (10, 14, 18) zur Luftversorgung verbunden und dazu vorgesehen ist, wahlweise zum Aufheizen der zugeführten Luft auf eine vorgewählte Temperatur eingeschaltet zu werden, um in einem Abschnitt eine Kombination des Aufheizens durch optionale Anteile von durch die Infrarotröhren verursachter Strahlungswärme und durch die Zufuhr aufgeheizter Luft verursachter Konvektionswärme auf die Güter einwirken zu lassen.

2. Wärmebehandlungsofen nach Patentanspruch 1,
dadurch gekennzeichnet, daß
die Infrarotstrahlungsröhren (15) in Räumen zwischen benachbarten Luftdüsen angeordnet sind.

3. Wärmebehandlungsofen nach einem der Ansprüche 1 oder 2, gekennzeichnet durch,
zumindest einen Ofenabschnitt (8, 8a, 8b) der zusammengefügt ist mit zumindest einem herkömmlichen Konvektionsofenabschnitt und/oder einem herkömmlichen Infrarotofenabschnitt (1) bzw. (5).

## Revendications

1. Four de traitement thermique comportant au moins une section de four (8, 8a, 8b) construite de façon modulaire, dans lequel les faces internes (13, 17) des parois du four sont, au moins partiellement, recouvertes d'un matériau réfléchissant et supportent un ensemble de tubes à rayonnement infrarouge (15) pouvant être reliés à une source de courant, ladite section de four étant équipée de dispositifs d'alimentation en air (10, 14, 18),
caractérisé en ce que, les dispositifs d'alimentation en air comportent des buses d'air (18) formées dans le matériau réfléchissant des parois du four, associées à des tubes à rayonnement infrarouge (15), et en ce qu'une unité de chauffage (3, 11) au moins est raccordée aux dispositifs d'alimentation en air (10, 14, 18) et conçue pour être mise en marche, le cas échéant, pour chauffer l'air d'alimentation jusqu'à une température choisie, afin de soumettre les marchandises, dans l'une des sections, à une combinaison, dans un rapport choisi, d'un chauffage par rayonnement au moyen de tubes à rayonnement infrarouge et d'un chauffage par convection au moyen d'une alimentation en air chaud.

2. Four de traitement thermique selon la revendication 1, caractérisé en ce que les tubes à rayonnement infrarouge (15) sont prévus dans des espaces situés entre des buses d'air voisines.

3. Four de traitement thermique selon l'une ou l'autre des revendication 1 et 2, caractérisé en ce qu'il comporte au moins une section de four (8, 8a, 8b) assemblée avec au moins un four à convection classique et/ou un four à rayonnement infrarouge classique (1 et 5 respectivement).
